# EUROPÄISCHE PATENTSCHRIFT

(11) **EP 3 498 423 B1**
(45) Veröffentlichungstag und Bekanntmachung des Hinweises auf die Patenterteilung: **16.02.2022**
(21) Anmeldenummer: 18210694.8
(22) Anmeldetag: 06.12.2018
(51) Int. Cl.: B23Q 17/22, B27B 31/06, B27F 1/02, B27M 1/08, B23Q 17/24, B27C 5/06, B27M 3/18, B23Q 7/00

(54) **BEARBEITUNGSVORRICHTUNG ZUM BEARBEITEN EINER WERKSTÜCKSCHMALSEITE SOWIE VERFAHREN**
PROCESSING DEVICE FOR PROCESSING THE NARROW SIDE OF A WORKPIECE AND METHOD
DISPOSITIF D'USINAGE DESTINÉ À USINER UN PETIT CÔTÉ DE PIÈCE À USINER AINSI QUE PROCÉDÉ

(30) Priorität: 14.12.2017 DE 102017129916
(43) Veröffentlichungstag der Anmeldung: 19.06.2019
(73) Patentinhaber: HOMAG GmbH, 72296 Schopfloch (DE)
(72) Erfinder: Knorr, Wolfgang, 91798 Höttingen (DE); Winney, Stephen, 72250 Freudenstadt (DE)
(74) Vertreter: Hoffmann Eitle

(56) Entgegenhaltungen:
- EP-A1- 2 308 659
- EP-A1- 2 377 786
- EP-A1- 2 792 460
- EP-A1- 3 028 806
- EP-A2- 1 190 824

## Beschreibung

### Technisches Gebiet

Die Erfindung betrifft eine Bearbeitungsvorrichtung zum Bearbeiten einer Schmalseite eines, insbesondere plattenförmigen, Werkstücks. Eine derartige Bearbeitungsvorrichtung kann insbesondere im Bereich der Möbel- und Bauelementeindustrie zum Einsatz kommen.

### Stand der Technik

Im Stand der Technik sind Bearbeitungsmaschinen bekannt, mit denen Fußbodenpaneele bearbeitet werden können. Hierbei werden die Fußbodenpaneele durch eine Längsprofiliermaschine bewegt, mit der ein Profil (bspw. ein sogenanntes Klick-Profil) in eine Schmalseite des Werkstücks eingebracht wird.

Für eine hochwertige Bearbeitung und ein entsprechendes Bearbeitungsergebnis ist es in diesem Zusammenhang wesentlich, die Relation der zu bearbeitenden Schmalseite in Bezug auf eine optische und/oder dreidimensionale Struktur an der Hauptseite des Werkstücks zu beachten. Um eine stets gleichbleibende Qualität sicherzustellen, wird deshalb zunächst eine Referenzkante an einer Schmalseite des Werkstücks eingebracht, die für nachfolgende Bearbeitungsschritte als Bezugsbereich dient.

In der DE 101 05 960 A1 wird ein Verfahren zum Bearbeiten von fortlaufend bewegten Werkstücken beschrieben, wobei die Werkstücke ausgerichtet und an einer im Wesentlichen parallel zur Bewegungsrichtung verlaufenden ersten Seite im Durchlauf bearbeitet sowie an einer der ersten Seite gegenüberliegenden, im Wesentlichen parallel zur Bewegungsrichtung verlaufenden zweiten Seite unter Bildung einer Referenzkante im Durchlauf bearbeitet werden. Die Werkstücke werden danach im Durchlauf quer zur Bewegungsrichtung verschoben, an der Referenzkante der zweiten Seite ausgerichtet und an der zweiten Seite im Durchlauf auf Maß bearbeitet.

Obwohl mit der aus der DE 101 05 960 A1 bekannten Bearbeitungsmaschine Werkstücke nach der vollständigen Bearbeitung eine erste und eine zweite Seite aufweisen, die zueinander maß- und winkelgerecht ausgerichtet sind, besteht die Anforderung, die Referenzkante noch exakter an der eine optische und/oder dreidimensionale Struktur der Hauptseite des Werkstücks auszurichten.

Als weitere Veröffentlichung ist die EP 2 308 659 A1 bekannt, die eine Vorrichtung sowie ein Verfahren zum Ausrichten von Werkstücken beschreibt. Im Rahmen des Verfahrens wird eine optische und/oder dreidimensionale Struktur der auf einer Fördereinrichtung geförderten Werkstücke erfasst, wobei in einer Ausführungsform ein Bearbeitungsmittel quer zur Förderrichtung auf Grundlage des Erfassungsergebnisses der Erfassungseinrichtung verfahrbar ist. Die EP 2 308 659 A1 stellt die Basis für die Oberbegriffe der Ansprüche 1 und 7 dar.

Die EP 2 792 460 A1 beschreibt eine Vorrichtung und ein Verfahren zum Kantenbearbeiten eines Werkstücks.

### Gegenstand der Erfindung

Die Erfindung zielt darauf ab, eine Vorrichtung und ein Verfahren bereitzustellen, mit denen die Bearbeitungsgenauigkeit und damit die Fertigungsqualität weiter gesteigert werden kann.

Die Erfindung stellt eine Bearbeitungsvorrichtung gemäß Anspruch 1 sowie ein Verfahren gemäß Anspruch 7 bereit, mit denen das genannte Ziel erreicht wird. Weitere bevorzugte Ausführungsformen sind in den abhängigen Ansprüchen aufgeführt und in der nachfolgenden Beschreibung der Erfindung erläutert.

Ein Gedanke der Erfindung ist es, ein bewegtes Werkstück im eingespannten Zustand mittels einer Erfassungseinrichtung zu bewerten und auf Grundlage der hierauf ermittelten Informationen eine Bearbeitungseinrichtung derart zu bewegen, dass die zu erstellende Referenzkante anhand optischen und/oder dreidimensionalen Struktur positioniert wird. Auf diese Weise ist es möglich, die Referenzkante exakt entlang der optischen und/oder dreidimensionalen Struktur auszurichten.

Die optische Struktur kann hierbei eine grafische Ausgestaltung/Dekor an einer Hauptseite des Werkstücks sein. Eine dreidimensionale Struktur ist beispielsweise eine sich entlang der Hauptseite erstreckende Vertiefung oder ein sich entlang der Hauptseite erstreckendes Profil. Zum Beispiel kann eine solche Vertiefung oder ein solches Profil durch eine Presse in eine Rohplatte eingebracht werden.

Die Erfindung stellt eine Bearbeitungsvorrichtung bereit, die insbesondere zur Bearbeitung von plattenförmigen Werkstücken vorgesehen ist. Bei solchen Werkstücken kann es sich beispielsweise um Bretter für Möbel, Fußbodenpaneele, Schrankwände, Küchenarbeitsplatten oder Ähnliches handeln. Die Bearbeitungsvorrichtung umfasst eine Bearbeitungseinrichtung zum Bearbeiten einer Schmalseite eines Werkstücks. Bei einer solchen Bearbeitungseinrichtung kann es sich z.B. um einen Fräser handeln. Ferner umfasst die Bearbeitungsvorrichtung eine Fördereinrichtung zum Bewegen des Werkstücks in einer Transportrichtung relativ zur Bearbeitungseinrichtung, wie beispielsweise einen Bandförderer.

Die erfindungsgemäße Bearbeitungsvorrichtung weist eine Erfassungseinrichtung zum Erfassen einer optischen und/oder dreidimensionalen Struktur anhand der Fördereinrichtung bewegten Werkstücks auf. Eine solche Erfassungseinrichtung kann eine Kamera, wie eine CCD-Kamera, sein, mit der es möglich ist, das optische Äußere des Werkstücks oder einer auf dem Werkstück vorliegenden Struktur im zu erfassenden Bereich zu ermitteln. Dabei kann die Erfassung der Struktur während einer Bewegung des Werkstücks mittels der Fördereinrichtung durchgeführt werden.

Darüber hinaus umfasst die Bearbeitungsvorrichtung eine Halteeinrichtung zum Halten des Werkstücks an der Fördereinrichtung zumindest zwischen der Position der Erfassungseinrichtung und der Bearbeitungseinrichtung. Die Halteeinrichtung ermöglicht ein Halten des Werkstücks, während dieses bewegt wird. Es ist bevorzugt, dass das Werkstück, insbesondere mittels eines Riemenoberdrucks, zwischen dem Erfassen und dem Bearbeiten durchgängig eingespannt ist. Somit kann das Werkstück in einem eingespannten Zustand erfasst und bearbeitet werden.

Da das Werkstück mit der genannten Halteeinrichtung zwischen der Position der Erfassungseinrichtung und der Bearbeitungseinrichtung gehalten werden kann, ist die exakte Lage der durch die Erfassungseinrichtung erfassten Position der optischen und/oder dreidimensionalen Struktur am Werkstück mit derjenigen am Bearbeitungsort überein, da das Werkstück nicht erneut gespannt werden muss. Somit liegen keine weiteren Einflüsse vor, die die Position der optischen und/oder dreidimensionalen Struktur verändern könnten. Wird das Werkstück durch die Halteeinrichtung verformt, so liegt die Verformung auch zum Zeitpunkt der Bearbeitung weiter vor. Dies hat den Vorteil, dass die Bearbeitung durch die Bearbeitungseinrichtung besonders präzise gesteuert werden kann.

Durch die Bearbeitungseinrichtung, die insbesondere als Fräser ausgebildet ist, kann eine Referenzkante am Werkstück hergestellt werden. Die Referenzkante kann für nachfolgende Bearbeitungsschritte als Bezugspunkt oder Bezugsebene dienen.

Dabei ist es vorgesehen, dass die Bearbeitungsvorrichtung eine Steuereinrichtung umfasst, die eingerichtet ist, auf Grundlage des Erfassungsergebnisses der Erfassungseinrichtung Steuerbefehle zum Bewegen der Bearbeitungseinrichtung auszugeben. Eine solche Steuereinrichtung kann beispielsweise eine zentrale oder dezentrale Steuereinrichtung der Bearbeitungsvorrichtung sein.

Durch die Erfassungseinrichtung wird an der Vorderkante des Werkstücks eine Differenz zwischen der Schmalseite des Werkstücks und der optischen und/oder dreidimensionalen Struktur ermittelt, und die entlang des Werkstücks ermittelten Abweichungen zwischen der Schmalseite des Werkstücks und der optischen und/oder dreidimensionalen Struktur werden als Wegpunkte der Bearbeitungseinrichtung definiert. Somit ist es möglich, das an die Bearbeitungseinrichtung anhand von Steuerbefehls übertragene Datenvolumen zu reduzieren und die Steuerbefehle mit einer sehr geringen Zeitverzögerung zu übermitteln.

Gemäß einer weiteren Ausführungsform ist es vorgesehen, dass die Bearbeitungseinrichtung auf Grundlage des Erfassungsergebnisses der Erfassungseinrichtung quer, insbesondere senkrecht, zur Transportrichtung des Werkstücks bewegbar ist. So ist es möglich, eine Querseite des Werkstücks zu bearbeiten.

Die Halteeinrichtung kann einen Riemenoberdruck und/oder die Fördereinrichtung einen Förderstrang (oder mehrere Förderstränge) oder eine Kettenbahn (oder mehrere Kettenbahnen) umfassen. Es hat sich gezeigt, dass die Kombination aus Riemenoberdruck und Förderstrang oder Kettenbahn zu einer besonders sicheren Fixierung des Werkstücks während dessen Bewegung mit der Fördereinrichtung geeignet ist. Ein Riemenoberdruck umfasst einen oder mehrere umlaufende Riemen, die mit einer in vertikaler Richtung oberen Seite des Werkstücks in Kontakt kommen.

Die Erfassungseinrichtung kann eine Kamera, insbesondere eine CCD-Kamera sein. Eine Kamera ermöglicht die Erfassung der optischen und/oder dreidimensionalen Struktur, sodass die durch die Erfassungseinrichtung erfassten Daten zur optischen und/oder dreidimensionalen Struktur im Betrieb der Bearbeitungseinrichtung genutzt werden können.

Die Erfassungseinrichtung, insbesondere Kamera, ist bevorzugt unterhalb des Werkstücks angeordnet, und das Objektiv der Kamera weist zumindest teilweise in vertikaler Richtung nach oben. Somit kann ein Werkstück und eine am Werkstück vorliegende Struktur erfasst werden, während das Werkstück an der Kamera vorbei bewegt wird. Die Ausrichtung "zumindest teilweise in vertikaler Richtung nach oben" schließt hierbei auch eine zur vertikalen Richtung schräge Ausrichtung des Objektivs der Erfassungseinrichtung/ Kamera ein.

Alternativ (sofern die Dekorseite bei der Produktion obenliegend ist) kann die Kamera auch oberhalb des Werkstücks und das Objektiv der Kamera in vertikaler Richtung nach unten angeordnet sein.

In einer Ausführungsform ist es vorgesehen, dass die Bearbeitungsvorrichtung einen Servomotor oder einen Linearmotor umfasst, um die Bearbeitungseinrichtung zu bewegen. Ein Servomotor oder ein Linearmotor ist besonders geeignet, eine präzisere Positionierung der Bearbeitungseinrichtung vorzunehmen. Darüber hinaus kann ein Servomotor oder ein Linearmotor mit einer äußerst geringen Latenz angesprochen werden, sodass es möglich ist, bei hohen Fördergeschwindigkeiten des Werkstücks eine präzise Bearbeitung durchzuführen.

Die Erfindung betrifft ferner eine Bearbeitungsanlage, welche Bearbeitungsanlage eine Bearbeitungsvorrichtung gemäß einem der vorangegangenen Aspekte umfasst. Ferner ist eine nachrangig zur Bearbeitungsvorrichtung angeordnete Längsprofiliermaschine vorgesehen, die dazu eingerichtet ist, ein Profil in eine Schmalseite des Werkstücks einzubringen. Die Längsprofiliermaschine weist ein Ausrichtlineal auf, um das Werkstück an der durch die Bearbeitungseinrichtung bearbeiteten Schmalseite auszurichten. Somit ist es möglich, durch die Bearbeitungsvorrichtung eine Referenzkante in das Werkstück einzubringen, welche Referenzkante bei einer Bearbeitung in der Längsprofiliermaschine als Ausgangspunkt für weitere Bearbeitungen Anwendung finden kann.

Die Erfindung betrifft ferner ein Verfahren zum Bearbeiten einer Schmalseite eines insbesondere plattenförmigen Werkstücks. Ein solches Werkstück kann aus Holz- oder Holzwerkstoffen ausgebildet sein. Im Rahmen des Verfahrens kann eine Bearbeitungsvorrichtung oder Bearbeitungsanlage gemäß einem der zuvor genannten Aspekte zum Einsatz kommen.

Im Rahmen des Verfahrens wird mittels der Erfassungseinrichtung an der Vorderkante des Werkstücks eine Differenz zwischen der Schmalseite des Werkstücks und der optischen und/oder dreidimensionalen Struktur ermittelt, und die entlang des Werkstücks ermittelten Abweichungen zwischen der Schmalseite des Werkstücks und der optischen und/oder dreidimensionalen Struktur werden als Wegpunkte der Bearbeitungseinrichtung definiert. Somit ist es möglich, das an die Bearbeitungseinrichtung anhand von Steuerbefehls übertragene Datenvolumen zu reduzieren und die Steuerbefehle mit einer sehr geringen Zeitverzögerung zu übermitteln.

Gemäß einer bevorzugten Ausführungsform kann es sich um eine Platte aus MDF (mitteldichtes Fasermaterial), HDF (hochdichtes Fasermaterial), WPC (Holz-Polymer-Werkstoff), o.Ä. handeln. Das Verfahren umfasst dabei die Schritte: Bewegen des eine optische und/oder dreidimensionale Struktur aufweisenden Werkstücks mittels einer Fördereinrichtung in einer Transportrichtung, Erfassen der optischen und/oder dreidimensionalen Struktur des bewegten Werkstücks, Bewegen einer Bearbeitungseinrichtung zum Bearbeiten einer Schmalseite eines Werkstücks auf Grundlage des Erfassungsergebnisses der Erfassungseinrichtung, wobei das Werkstück zumindest zwischen dem Erfassen und dem Bearbeiten mit der Bearbeitungseinrichtung an der Fördereinrichtung gehalten wird.

Es ist bevorzugt, dass das Werkstück, insbesondere mittels eines Riemenoberdrucks, zwischen dem Erfassen und dem Bearbeiten durchgängig eingespannt ist. Somit kann das Werkstück in einem eingespannten Zustand erfasst und bearbeitet werden.

Gemäß einer Ausführungsform des Verfahrens ist es dabei vorgesehen, das mit der Bearbeitungsvorrichtung eine zur Transportrichtung schräge oder gekrümmte Differenzkante am Werkstück ausgebildet wird. Somit ist der Verlauf der Referenzkante unabhängig von der durch die Einspannung des Werkstücks bedingten Ausrichtung des Werkstücks. Wird beispielsweise ein Werkstück "schief" eingespannt, so kann die Referenzkante eine zur Transportrichtung schräge Ausrichtung aufweisen. Somit kann die Präzision der Bearbeitung erhöht und die Variabilität weiter gesteigert werden.

In einer Ausführungsform ist es vorgesehen, dass die Bearbeitungseinrichtung quer, insbesondere senkrecht, zur Transportrichtung bewegt wird. Somit kann auch eine Querseite des Werkstücks (eine quer zur Förderrichtung verlaufende Seite des Werkstücks) bearbeitet werden.

Ferner kann es vorgesehen sein, dass das Werkstück nach einer Bearbeitung mittels der Bearbeitungseinrichtung zu einer Längsprofiliermaschine zum Einbringen eines Profils in eine Schmalseite des Werkstücks zugeführt wird. Somit kann das Einbringen einer Referenzkante mit der weiteren Bearbeitung des Werkstücks im Bereich der Schmalseite verknüpft werden. Die optische und/oder dreidimensionale Struktur des bewegten Werkstücks kann mit einer Kamera, insbesondere einer CCD-Kamera, erfasst werden.

Die Bearbeitungseinrichtung kann eine plane und/oder (durchgängig profilierte Referenzkante) oder einen Fertigungsabschnitt am Werkstück ausbilden.

### Kurze Beschreibung der Zeichnungen

- Fig. 1: zeigt eine Draufsicht einer Ausführungsform der erfindungsgemäßen Bearbeitungsvorrichtung.
- Fig. 2: ist eine Draufsicht einer Längsprofiliermaschine, die sich an die Bearbeitungsvorrichtung gemäß Fig. 1 anschließen kann

Detaillierte Beschreibung der bevorzugten Ausführungsform Anhand der beigefügten Figuren wird eine Ausführungsform der Erfindung im Detail erläutert.

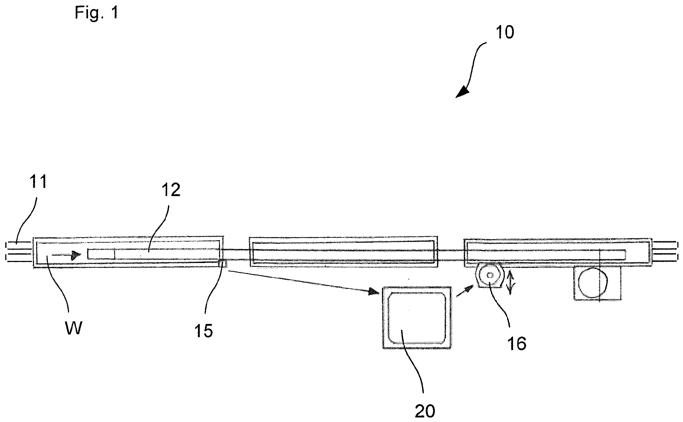

Die in Fig. 1 dargestellte Bearbeitungsvorrichtung 10 zum Bearbeiten einer Schmalseite eines Werkstücks W wird im Bereich der Möbelindustrie eingesetzt, um das entsprechende Werkstück für eine weitere Bearbeitung vorzubereiten. Konkret kann es sich bei einem solchen Werkstück um ein Fußbodenpaneel handeln, das an einer Hauptseite mit einer sich in Längsrichtung des Fußbodenpaneels erstreckender Fase versehen ist.

Insbesondere soll mittels der Bearbeitungsvorrichtung 10 eine Referenzkante in die jeweiligen Werkstücke W eingebracht werden, wobei die Referenzkante wiederum als Bezugsbereich für nachfolgende Bearbeitungsschritte dient.

Die Bearbeitungsvorrichtung 10 umfasst eine Fördereinrichtung 11, die vorliegend als Bandförderer ausgebildet ist. Die Fördereinrichtung 11 bewegt Werkstücke beispielsweise mit einer Geschwindigkeit von 200m/min, wobei die zu bearbeitenden Werkstücke beispielsweise um 50mm oder mehr voneinander beabstandet sind. Das Zuführen der Werkstücke W erfolgt dabei im Wesentlichen parallel zur Transportrichtung, wobei die Transportrichtung in Fig. 1 durch einen entsprechenden Pfeil gekennzeichnet ist.

Durch die Bewegung mittels der Fördereinrichtung 11 gelangt das Werkstück W in den Bereich einer mitlaufenden Halteeinrichtung 12, die im vorliegenden Ausführungsbeispiel als Riemenoberdruck ausgeführt ist. Anhand der Halteeinrichtung 12 ist es möglich, das Werkstück während einer kontinuierlichen Bewegung mit der Fördereinrichtung 11 in einem geklemmten Zustand zu halten.

Nachdem das Werkstück W auf diese Weise mit der Halteeinrichtung 12 geklemmt wurde, kann eine optische und/oder dreidimensionale Struktur an der Hauptseite des Werkstücks W (obere Seite in der Draufsicht gemäß Fig. 1) durch eine Erfassungseinrichtung 15 (insbesondere eine CCD-Kamera) erfasst werden. Gemäß der Ausführungsform ist die Erfassungseinrichtung (Kamera) 15 unterhalb der Fördereinrichtung angeordnet, so dass das Objektiv der Erfassungseinrichtung 15 in vertikaler Richtung nach oben weist. Somit kann das an einer Unterseite des Werkstücks vorgesehene Dekor mit der Erfassungseinrichtung 15 erfasst werden.

Da das Werkstück W im Bereich der Erfassungseinrichtung 15 in einem geklemmten Zustand gehalten wird, wird auch die Lage und Ausrichtung des Werkstücks W und damit der erfassten optischen und/oder dreidimensionalen Struktur während der Förderbewegung durch die Halteeinrichtung 12 fixiert. Dies bedeutet, dass sich durch die Einspannung des Werkstücks eine gekrümmte, beispielsweise s-förmige, Kontur des Werkstücks W ergeben kann.

In einem nachgeordneten Bereich der Bearbeitungsvorrichtung 10 befindet sich eine Bearbeitungseinrichtung 16 (insbesondere ein Fräser), die dazu eingerichtet ist, die Schmalseite des Werkstücks W zu bearbeiten und somit eine Referenzkante oder einen Fertigschnitt zu erstellen.

Auf Grundlage der durch die Erfassungseinrichtung 15 ermittelten Informationen wird die Position der Bearbeitungseinrichtung 16 mittels einer Steuerung 20 eingestellt. Die Position der Bearbeitungsvorrichtung wird dabei entlang einer berechneten Kontur geführt, sodass die Referenzkante über die Länge des Werkstücks W exakt entlang einer optischen Struktur oder einer dreidimensionalen Oberflächenstruktur ausgerichtet werden.

In einer Transportrichtung nachrangig zur Bearbeitungsvorrichtung 10 ist eine Längsprofiliermaschine 30 vorgesehen. Das mit der Bearbeitungsvorrichtung 10 mit einer Referenzkante versehene Werkstück kann dabei beispielsweise direkt von der Bearbeitungsvorrichtung 10 zur Längsprofiliermaschine 30 geführt werden. Alternativ ist es möglich, das Werkstück W über eine (nicht dargestellte) Förderstrecke der Längsprofiliermaschine 30 zuzuführen, oder das Werkstück W gar zwischenzulagern.

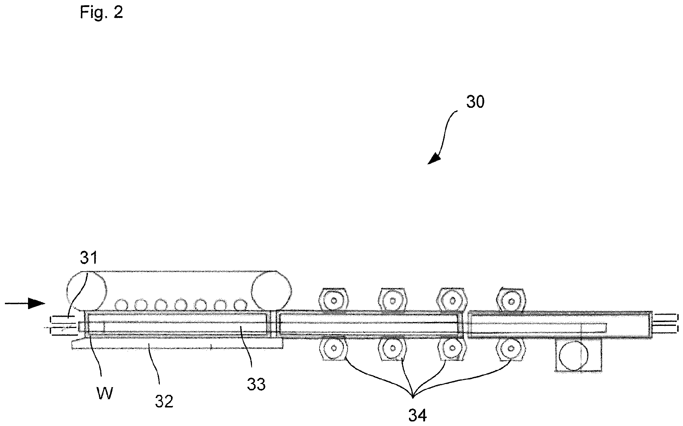

Gelangt das Werkstück in den Bereich der Längsprofiliermaschine 30, wird das Werkstück W durch eine Fördereinrichtung 31 der Längsprofiliermaschine 30 erfasst und in einer Transportrichtung geführt (die Transportrichtung ist durch einen Pfeil in Fig. 2 angedeutet) . Die Längsprofiliermaschine 30 umfasst einen Oberdruck 33, der das Werkstück W gegen die Fördereinrichtung 31 drückt und somit das sich bewegende Werkstück klemmt.

Im Einlaufbereich der Längsprofiliermaschine 30 befindet sich ein Ausrichtlineal 32, das dazu dient, das Werkstück W an der Referenzkante des Werkstücks W auszurichten. Nachfolgend wird das Werkstück W durch die Fördereinrichtung 31 in den Bereich eines oder mehrerer Profilierwerkzeuge 34 geführt, die dazu verwendet werden, ein Profil in eine Schmalseite des Werkstücks W einzubringen. Beispielsweise kann ein sogenanntes Klick-Profil in einem Werkstück hergestellt werden, wenn es sich bei dem Werkstück W um ein Fußbodenpaneel handelt.

Im hier beschriebenen Ausführungsbeispiel sind gegenüberliegende Profilierwerkzeuge 34 vorgesehen, um das jeweilige Werkstück W beidseitig mit jeweils einem Profil zu versehen.

## Patentansprüche

1. Bearbeitungsvorrichtung (10), aufweisend:
eine Bearbeitungseinrichtung (16) zum Bearbeiten einer Schmalseite eines Werkstücks (W),
eine Fördereinrichtung (11) zum Bewegen des Werkstücks (W) in einer Transportrichtung relativ zur Bearbeitungseinrichtung (16),
eine Erfassungseinrichtung (15) zum Erfassen einer optischen und/oder dreidimensionalen Struktur des mittels der Fördereinrichtung (11) bewegten Werkstücks (W), und
eine Halteeinrichtung (12) zum Halten des Werkstücks (W) an der Fördereinrichtung (11) zumindest zwischen der Position der Erfassungseinrichtung (15) und der Bearbeitungseinrichtung (16),
wobei die Bearbeitungsvorrichtung (10) eine Steuereinrichtung (20) umfasst, die eingerichtet ist, auf Grundlage des Erfassungsergebnisses der Erfassungseinrichtung (15) Steuerbefehle zum Bewegen der Bearbeitungseinrichtung (16) auszugeben,
**dadurch gekennzeichnet, dass**
die Steuereinrichtung eingerichtet ist, eine durch die Erfassungseinrichtung (15) an einer Vorderkante des Werkstücks (W) ermittelte Differenz zwischen der Schmalseite des Werkstücks (W) und der optischen und/oder dreidimensionalen Struktur aufzunehmen und die entlang des Werkstücks ermittelten Abweichungen zwischen der Schmalseite des Werkstücks (W) und der optischen und/oder dreidimensionalen Struktur als Wegpunkte der Bearbeitungseinrichtung (16) zu definieren.

2. Bearbeitungsvorrichtung (10) gemäß Anspruch 1, **dadurch gekennzeichnet, dass** die Bearbeitungseinrichtung (16) auf Grundlage des Erfassungsergebnisses der Erfassungseinrichtung (15) quer, insbesondere senkrecht, zur Transportrichtung des Werkstücks (W) bewegbar ist.

3. Bearbeitungsvorrichtung (10) gemäß einem der vorangegangenen Ansprüche, **dadurch gekennzeichnet, dass** die Halteeinrichtung (12) einen Riemenoberdruck aufweist und/oder die Fördereinrichtung (11) eine Kettenbahn umfasst.

4. Bearbeitungsvorrichtung (10) gemäß einem der vorangegangenen Ansprüche, **dadurch gekennzeichnet, dass** die Erfassungseinrichtung eine Kamera, insbesondere eine CCD-Kamera, umfasst, wobei bevorzugt ist, dass ein Objektiv der Kamera in vertikaler Richtung nach oben weist.

5. Bearbeitungsvorrichtung (10) gemäß einem der vorangegangenen Ansprüche, **dadurch gekennzeichnet, dass** die Bearbeitungsvorrichtung (10) einen Servomotor oder Linearmotor umfasst, um die Bearbeitungseinrichtung (16) zu bewegen.

6. Bearbeitungsanlage, umfassend eine Bearbeitungsvorrichtung (10) gemäß einem der vorangegangenen Ansprüche und eine nachrangig zur Bearbeitungsvorrichtung (10) angeordnete Längsprofiliermaschine (30) zum Einbringen eines Profils in eine Schmalseite des Werkstücks (W), welche Längsprofiliermaschine (30) ein Ausrichtlineal (32) aufweist, um das Werkstück (W) an der durch die Bearbeitungseinrichtung (16) bearbeiteten Schmalseite auszurichten.

7. Verfahren zum Bearbeiten einer Schmalseite eines, insbesondere plattenförmigen, Werkstücks (W), insbesondere eines Werkstücks (W) aus Holz oder Holzwerkstoffen, umfassend die Schritte:
Bewegen des eine optische und/oder dreidimensionale Struktur aufweisenden Werkstücks (W) mittels einer Fördereinrichtung (11) in einer Transportrichtung,
Erfassen der optischen und/oder dreidimensionalen Struktur des bewegten Werkstücks,
Bewegen einer Bearbeitungseinrichtung (16) zum Bearbeiten einer Schmalseite des Werkstücks (W) auf Grundlage des Erfassungsergebnisses der Erfassungseinrichtung (15),
wobei das Werkstück zumindest zwischen dem Erfassen und dem Bearbeiten mit der Bearbeitungseinrichtung (16) an der Fördereinrichtung (11) gehalten wird,
**dadurch gekennzeichnet, dass**
durch die Erfassungseinrichtung (15) an einer Vorderkante des Werkstücks (W) eine Differenz zwischen der Schmalseite des Werkstücks (W) und der optischen und/oder dreidimensionalen Struktur ermittelt wird, und die entlang des Werkstücks ermittelten Abweichungen zwischen der Schmalseite des Werkstücks (W) und der optischen und/oder dreidimensionalen Struktur als Wegpunkte der Bearbeitungseinrichtung (16) definiert werden.

8. Verfahren gemäß Anspruch 7, **dadurch gekennzeichnet, dass** mit der Bearbeitungseinrichtung (16) eine zur Transportrichtung schräge oder gekrümmte Referenzkante am Werkstück ausgebildet wird.

9. Verfahren gemäß einem der Ansprüche 7-8, **dadurch gekennzeichnet, dass** das Werkstück, insbesondere mittels eines Riemenoberdrucks, zwischen dem Erfassen und dem Bearbeiten durchgängig eingespannt ist.

10. Verfahren gemäß einem der Ansprüche 7-9, **dadurch gekennzeichnet, dass** die Bearbeitungseinrichtung (16) quer, insbesondere senkrecht, zur Transportrichtung bewegt wird.

11. Verfahren gemäß einem der Ansprüche 7-10, **dadurch gekennzeichnet, dass** das Werkstück (W) nach einer Bearbeitung mittels der Bearbeitungseinrichtung (16) zu einer Längsprofiliermaschine (30) zum Einbringen eines Profils in eine Schmalseite des Werkstücks (W) zugeführt wird.

12. Verfahren gemäß einem der Ansprüche 7-11, **dadurch gekennzeichnet, dass** die optische und/oder dreidimensionale Struktur des bewegten Werkstücks (W) mittels einer Kamera, insbesondere eine CCD-Kamera, erfasst wird, wobei bevorzugt ist, dass ein Objektiv der Kamera in vertikaler Richtung nach oben weist.

13. Verfahren gemäß einem der Ansprüche 7-12, **dadurch gekennzeichnet, dass** die Bearbeitungseinrichtung (16) eine plane und/oder profilierte, insbesondere durchgängig profilierte, Referenzkante oder Fertigschnitt am Werkstück (W) ausbildet.

## Claims

1. Processing device (10), having:
a processing tool (16) for processing a narrow side of a workpiece (W),
a conveyor device (11) for moving the workpiece (W) in a direction of transport relative to the processing tool (16),
a scanning device (15) for scanning an optical and/or three-dimensional structure of the workpiece (W) moved by means of the conveyor device (11), and
a holding device (12) for holding the workpiece (W) on the conveyor device (11) at least between the position of the scanning device (15) and the processing tool (16),
wherein the processing device (10) includes a control device (20) which is configured to output control commands for moving the processing tool (16) on the basis of the scanning result of the scanning device (15),
**characterised in that**
the control device is configured to record a difference between the narrow side of the workpiece (W) and the optical and/or three-dimensional structure determined by the scanning device (15) on a front edge of the workpiece (W) and to define the deviations between the narrow side of the workpiece (W) and the optical and/or three-dimensional structure determined along the workpiece as waypoints for the processing tool (16).

2. Processing device (10) according to claim 1, **characterised in that** the processing tool (16) is moveable transversely, in particular perpendicular to the direction of transport of the workpiece (W) on the basis of the scanning result of the scanning device (15).

3. Processing device (10) according to one of the preceding claims, **characterised in that** the holding device (12) exerts a downward belt pressure and/or the conveyor device (11) comprises a chain conveyor.

4. Processing device (10) according to one of the preceding claims, **characterised in that** the scanning device comprises a camera, in particular a CCD camera, wherein it is preferable if a lens of the camera points upwards in a vertical direction.

5. Processing device (10) according to one of the preceding claims, **characterised in that** the processing device (10) includes a servomotor or linear motor in order to move the processing tool (16).

6. Processing installation comprising a processing device (10) according to one of the preceding claims and a longitudinal profiling machine (30), arranged downstream from the processing device (10), for introducing a profile into a narrow side of the workpiece (W), said longitudinal profiling machine (30) having an alignment rail (32) to align the workpiece (W) on the narrow side processed by the processing tool (16).

7. Method for processing a narrow side of an in particular panel-formed workpiece (W), in particular of a workpiece (W) consisting of wood or wood-based materials, comprising the steps:
moving the workpiece (W) having an optical and/or three-dimensional structure in a direction of transport by means of a conveyor device (11),
scanning the optical and/or three-dimensional structure of the moved workpiece,
moving a processing tool (16) to process a narrow side of the workpiece (W) on the basis of the scanning result of the scanning device (15),
wherein the workpiece is held to the conveyor device (11) at least between the scanning and the processing with the processing tool (16),
**characterised in that**
a difference between the narrow side of the workpiece (W) and the optical and/or three-dimensional structure is determined by the scanning device (15) on a front edge of the workpiece (W), and the deviations between the narrow side of the workpiece (W) and the optical and/or three-dimensional structure determined along the workpiece are defined as waypoints for the processing tool (16).

8. Method according to claim 7, **characterised in that** a reference edge which is angled or curved in relation to the direction of transport is formed on the workpiece with the processing tool (16).

9. Method according to one of the claims 7-8, **characterised in that** the workpiece is clamped continuously between the scanning and the processing, in particular by means of a downward belt pressure.

10. Method according to one of the claims 7-9, **characterised in that** the processing tool (16) is moved transversely, in particular perpendicular, to the direction of transport.

11. Method according to one of the claims 7-10, **characterised in that**, following processing by means of the processing tool (16), the workpiece (W) is fed to a longitudinal profiling machine (30) for introducing a profile in a narrow side of the workpiece (W).

12. Method according to one of the claims 7-11, **characterised in that** the optical and/or three-dimensional structure of the moved workpiece (W) is scanned by means of a camera, in particular a CCD camera, wherein it is preferable if a lens of the camera points upwards in a vertical direction.

13. Method according to one of the claims 7-12, **characterised in that** the processing tool (16) forms a flat and/or profiled, in particular continuously profiled, reference edge or finished cut on the workpiece (W).

## Revendications

1. Dispositif d'usinage (10), présentant :
un appareil d'usinage (16) pour l'usinage d'un côté étroit d'une pièce à usiner (W),
un appareil de transport (11) pour le déplacement de la pièce à usiner (W) dans un sens de transport par rapport à l'appareil d'usinage (16),
un appareil de détection (15) pour la détection d'une structure optique et/ou en trois dimensions de la pièce à usiner (W) déplacée au moyen de l'appareil de transport (11), et
un appareil de retenue (12) pour la retenue de la pièce à usiner (W) au niveau de l'appareil de transport (11) au moins entre la position de l'appareil de détection (15) et de l'appareil d'usinage (16),
dans lequel le dispositif d'usinage (10) comprend un appareil de commande (20) qui est conçu afin de sortir, sur la base du résultat de détection de l'appareil de détection (15), des ordres de commande pour le déplacement de l'appareil d'usinage (16),
**caractérisé en ce que**
l'appareil de commande est conçu afin de recevoir une différence calculée par l'appareil de détection (15) au niveau d'une arête avant de la pièce à usiner (W) entre le côté étroit de la pièce à usiner (W) et la structure optique et/ou en trois dimensions et de définir les écarts calculés le long de la pièce à usiner entre le côté étroit de la pièce à usiner (W) et la structure optique et/ou en trois dimensions comme points de trajet de l'appareil d'usinage (16).

2. Dispositif d'usinage (10) selon la revendication 1, **caractérisé en ce que** l'appareil d'usinage (16) est mobile sur la base du résultat de détection de l'appareil de détection (15) transversalement, en particulier perpendiculairement, au sens de transport de la pièce à usiner (W).

3. Dispositif d'usinage (10) selon l'une quelconque des revendications précédentes, **caractérisé en ce que** l'appareil de retenue (12) présente une pression supérieure de courroie et/ou l'appareil de transport (11) comprend un transporteur à chaîne.

4. Dispositif d'usinage (10) selon l'une quelconque des revendications précédentes, **caractérisé en ce que** l'appareil de détection comprend une caméra, en particulier une caméra CCD, dans lequel il est préféré qu'un objectif de la caméra soit tourné vers le haut dans le sens vertical.

5. Dispositif d'usinage (10) selon l'une quelconque des revendications précédentes, **caractérisé en ce que** le dispositif d'usinage (10) comprend un servomoteur ou moteur linéaire afin de déplacer l'appareil d'usinage (16).

6. Installation d'usinage, comprenant un dispositif d'usinage (10) selon l'une quelconque des revendications précédentes et une machine de profilage longitudinal (30) agencée de manière subordonnée à l'appareil d'usinage (10) pour la réalisation d'un profil dans un côté étroit de la pièce à usiner (W), laquelle machine de profilage longitudinal (30) présente un guide d'orientation (32) afin d'orienter la pièce à usiner (W) au niveau du côté étroit usiné par l'appareil d'usinage (16).

7. Procédé d'usinage d'un côté étroit d'une pièce à usiner (W), en particulier en forme de plaque, en particulier d'une pièce à usiner (W) en bois ou matériaux dérivés du bois, comprenant les étapes suivantes :
le déplacement de la pièce à usiner (W) présentant une structure optique et/ou en trois dimensions au moyen d'un dispositif de transport (11) dans un sens de transport,
la détection de la structure optique et/ou en trois dimensions de la pièce à usiner déplacée,
le déplacement d'un appareil d'usinage (16) pour l'usinage d'un côté étroit de la pièce à usiner (W) sur la base du résultat de détection de l'appareil de détection (15),
dans lequel la pièce à usiner est maintenue au moins entre la détection et l'usinage avec l'appareil d'usinage (16) au niveau du dispositif de transport (11),
**caractérisé en ce qu'**
une différence entre le côté étroit de la pièce à usiner (W) et la structure optique et/ou en trois dimensions est déterminée par l'appareil de détection (15) au niveau d'une arête avant de la pièce à usiner (W), et les écarts calculés le long de la pièce à usiner sont définis entre le côté étroit de la pièce à usiner (W) et la structure optique et/ou en trois dimensions comme points de trajet de l'appareil d'usinage (16).

8. Procédé selon la revendication 7, **caractérisé en ce qu'**une arête de référence courbée ou oblique par rapport au sens de transport est réalisée au niveau de la pièce à usiner.

9. Procédé selon l'une quelconque des revendications 7-8, **caractérisé en ce que** la pièce à usiner est serrée en continu en particulier au moyen d'une pression supérieure de courroie entre la détection et l'usinage.

10. Procédé selon l'une quelconque des revendications 7-9, **caractérisé en ce que** l'appareil d'usinage (16) est déplacé transversalement, en particulier perpendiculairement, au sens de transport.

11. Procédé selon l'une quelconque des revendications 7-10, **caractérisé en ce que** la pièce à usiner (W) est fournie après un usinage au moyen de l'appareil d'usinage (16) à une machine de profilage longitudinal (30) pour la réalisation d'un profil dans un côté étroit de la pièce à usiner (W).

12. Procédé selon l'une quelconque des revendications 7-11, **caractérisé en ce que** la structure optique et/ou en trois dimensions de la pièce à usiner (W) déplacée est détectée au moyen d'une caméra, en particulier une caméra CCD, dans lequel il est préféré qu'un objectif de la caméra soit tourné vers le haut dans le sens vertical.

13. Procédé selon l'une quelconque des revendications 7-12, **caractérisé en ce que** l'appareil d'usinage (16) réalise une arête de référence ou coupe de finition plane et/ou profilée, en particulier profilée en continu au niveau de la pièce à usiner (W).
